# EUROPEAN PATENT SPECIFICATION

(11) **EP 1 483 619 B1**
(45) Date of publication and mention of the grant of the patent: **28.06.2006**
(21) Application number: 03714761.8
(22) Date of filing: 28.02.2003
(51) Int. Cl.: G02F 1/13, H04M 1/02

(54) **IMPACT RESISTANT LIQUID CRYSTAL DISPLAY ARRANGEMENT**
STOSSFESTE FLÜSSIGKRISTALLANZEIGEANORDNUNG
DISPOSITIF D'AFFICHAGE A CRISTAUX LIQUIDES RESISTANT AUX CHOCS

(30) Priority: 04.03.2002 US 86737
(43) Date of publication of application: 08.12.2004
(73) Proprietor: Nokia Corporation, 02150 Espoo (FI)
(72) Inventor: KELA, Jukka, Parkovsvej 3 2820 Gentofte (DK); OLSEN, Stefan, DK-2700 Bronshoj (DK); RAARUP LUNSGAARD, Helle, Parkosvej 3 2820 Gentofte (DK); STÖHR, Josef, 89129 Langenau (DE)
(74) Representative: van Walstijn, Bartholomeus G. G.
(86) International application number: PCT/EP2003/002057
(87) International publication number: WO 2003/075079

(56) References cited:
- EP-A- 0 310 889
- EP-A- 0 638 832
- EP-A- 0 730 185
- EP-A- 1 001 303
- US-A- 5 838 401
- US-A1- 2001 007 485
- PATENT ABSTRACTS OF JAPAN vol. 014, no. 296 (P-1067), 26 June 1990 (1990-06-26) & JP 02 093425 A (CANON INC), 4 April 1990 (1990-04-04)

## Description

The present invention relates to a display arrangement for holding a liquid crystal display (LCD) in a communication terminal in a fashion that minimizes the impact of external forces applied on the display arrangement.

### BACKGROUND OF THE INVENTION

Display holder arrangements are widely known in different types of electronic equipment. The display arrangement in electronic equipment aims to firstly hold the display for it to perform its purpose, and secondly to protect the display from the impact from any external forces applied on the electronic equipment. The second purpose of protecting the display is of particular importance for portable devices that easily can be dropped and that could be exposed to less careful handling.

Communication terminals, like mobile phones, communicators, pagers etc., have the disadvantage that they can not be rigid enough to easily resist external forces, as they would be too clumsy for the normal user. Only specially designed craftsman phones, like Nokia 6250^{™}, have this very rigid design. In other phones or electronic equipment the display arrangement is designed to prevent impact on the displays by a flexible or adjustable mounting. More precisely, the earlier implementations of display arrangements in communication terminals were constructed so that the LCD module was supported by the sidewalls or placed towards the sidewalls, and held in its position by the surrounding mechanical structure, that was applied directly to the LCD module. This caused a considerable amount of problems with cracking displays after the communication terminal had accidentally been dropped.

An example of earlier solutions is described in GB 2190529. This document discloses a liquid crystal display (LCD) mounted on a printed circuit board. The LCD is mounted behind an opening, the edges of which serve as a bezel for the

LCD. A resilient gasket extends the around the periphery of the LCD and is sandwiched between the LCD and the bezel to prevent movement of the LCD relative to the housing. Other examples of display arrangements are disclosed in EP 0939 532 A2, EP 0709714 B1 and FR 2674295 A1, that all describe solutions where the display has been fixed between walls in a housing.

EP 0 638 832 discloses an electronic device with a front cover provided with a window frame. A liquid crystal display is mounted on a fixing plate inside the electronic device directly below the window frame in the front cover. On the lower surface of the front cover an elastic member (sponge) in the form of a frame is applied along the whole periphery of the window frame. The elastic member abuts with the upper surface of the liquid crystal display, thereby preventing intrusion of dust onto the surface of the liquid crystal display. The elastic member can absorb vibrations of the liquid crystal display. This document discloses all of the features of the preambles of claims 1 and 13.

### DISCLOSURE OF THE INVENTION

Against this background, it is an object of the present invention to provide an electronic device having a front cover with a window frame and having a display arrangement for holding a liquid crystal display below the window frame in the front cover, the display arrangement comprising: a housing, a liquid crystal display having a top surface, a bottom surface and side surfaces connecting the top and bottom surfaces, a first resilient member supported by the housing, the first resilient member being in abutment with a peripheral area of the top surface of the liquid crystal display, a second resilient member supported by the housing, the second resilient member being in abutment with the inner surface of the front cover, the liquid crystal display being connected to the housing in a peripheral area of the bottom surface, and a gap between side surfaces of the liquid crystal display and any of the other components of the display arrangement.

The gap between the liquid crystal display and the surrounding mechanical structure and the flexible material used to retain the relative position of the LCD module to the surrounding mechanical structure allows movement of the liquid crystal display relative to the housing. Thus, the display arrangement is flexible and the liquid crystal display can better resist externally applied forces on the display arrangement. The second resilient member between the housing and the front cover protects the LCD module from dust and dirt and improves the resistance of the LCD module to externally applied forces on the front cover.

The display arrangement may also be provided with a gap between the mechanical structure surrounding the liquid crystal display and the printed circuit board on which the mechanical structure is mounted.

It is another object of the invention to provide a display arrangement for use in an electronic device having a front cover with a window frame, the display arrangement comprising: a housing, a liquid crystal display having a top surface, a bottom surface and side surfaces connecting the top and bottom surfaces, a frame disposed on the housing, said frame being provided with an aperture above the liquid crystal display, a first resilient member supported by the frame, the resilient member being in abutment with the liquid crystal display in a peripheral area of the top surface of the liquid crystal display, a second resilient member for abutment with the inner surface of the front cover, the second resilient member being supported by the frame, the liquid crystal display being connected to the housing in a peripheral area of the bottom surface, and a gap between side surfaces of the liquid crystal display and any of the other components of the display arrangement.

The first and second resilient member allows the liquid crystal display to move relative to the housing and to the front cover to enable a flexible display that adjusts to externally applied forces on the display arrangement or on the front cover and thereby the risk of breaking the liquid crystal is reduced. Further, the second resilient member protects the LCD module from dust and dirt.

It is yet another object of the invention to provide a display arrangement for use in an electronic device provided with a printed circuit board, said display arrangement comprising: a housing for mounting to the printed circuit board, a rectangular liquid crystal display supported by said housing, said housing having a bottom part for abutment with the printed circuit board, wherein the bottom part is provided with one or more recesses for locally creating a gap between the housing and the printed circuit board.

The gap or gaps allow that locally areas of the housing can move relative to the printed circuit board, to enable a flexible construction that adjusts to externally applied forces on the display arrangement and thereby the risk of breaking the liquid crystal is reduced.

Further objects, features, advantages and properties of the electroinic device and the display arrangements according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which:
Figure 1 shows in two different perspective views of a communication terminal in the form of a mobile phone.
Figure 2 schematically shows the essential parts of a telephone for communication with a cellular network.
Figure 3 shows a display arrangement and the top surface of a liquid crystal display in the display arrangement.
Figure 4 shows a cross-section of the display arrangement according to the invention.
Figures 5 shows a part of a detailed cross-section of the display arrangement according to the invention.
Figure 6 shows a perspective view of another embodiment of the invention.
Figure 7 shows a display arrangement in perspective mounted on a printed circuit board according to another embodiment of the invention.
Figure 8 shows a detailed cut-out of the embodiment in figure 6.

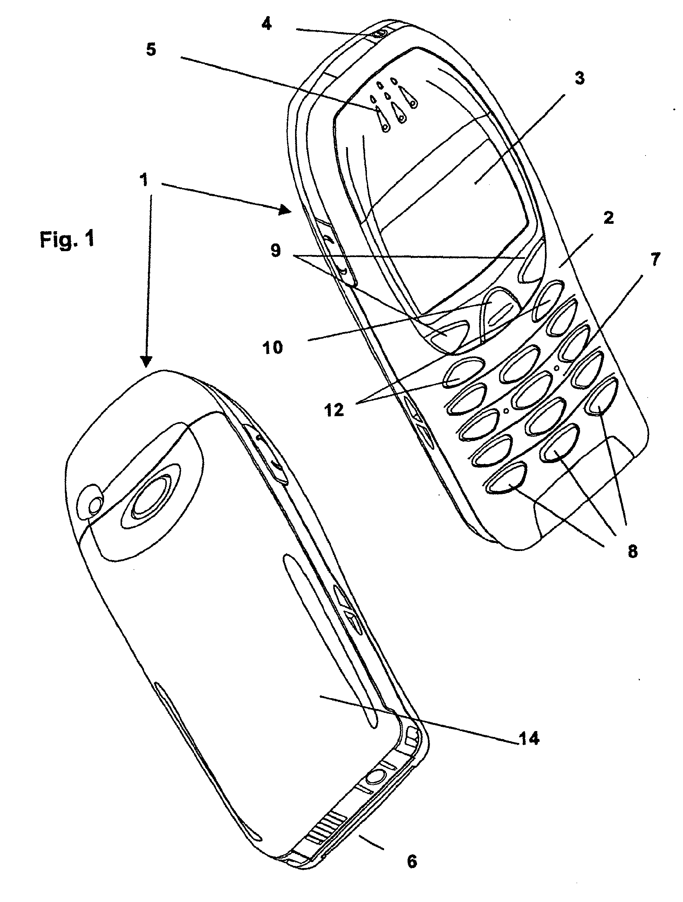

According to a first aspect the display arrangement according to the invention will be described with reference to a hand portable phone, preferably a cellular/mobile phone. An embodiment of this phone is shown in figure 1, where a cellular/mobile phone 1 is shown in perspective. As will be seen, the phone is provided with a front cover 2 having a window frame 3 encircling the protection window of the display assembly 3. The cellular/mobile phone comprises a user interface having an on/off button 4, a speaker 5 (only openings are shown), a keypad 7, a battery 14, a display/LCD 3 and a microphone 6 (only openings are shown).

The keypad 7 has a first group of keys 8 as alphanumeric keys, by means of which the user can enter a telephone number, write a text message (SMS), write a name (associated with the phone number), etc. Each of the twelve alphanumeric keys 8 is provided with a figure "0-9" or a sign "#" or "*", respectively. In alpha mode each key is associated with a number of letters and special signs used in the text editing.

The keypad 7 additionally comprises two menu selections or soft-keys 9, two call handling keys 12, and a navigation-key 10. The function of the soft-key depends on the state of the phone and the navigation in the menu by using a navigation-key. The present function of the menu selection keys 9 is shown in separate fields in the display 3 just above the keys 9. The two call handling keys 12 are used for establishing a call or a conference call, terminating a call or rejecting an incoming call. This key layout is characteristic of e.g. the Nokia 6210^{™} phone.

The navigation-key 10 is an up/down key and is placed centrally on the front surface of the phone between the display 3 and the group of alphanumeric keys 8. Hereby the user will be able to control this key with his thumb. This is the best site to place an input key requiring precise motor movements. Many experienced phone users are used to one-hand handling. They place the phone in the hand between the fingertips and the palm of the hand. Hereby the thumb is free for inputting information.

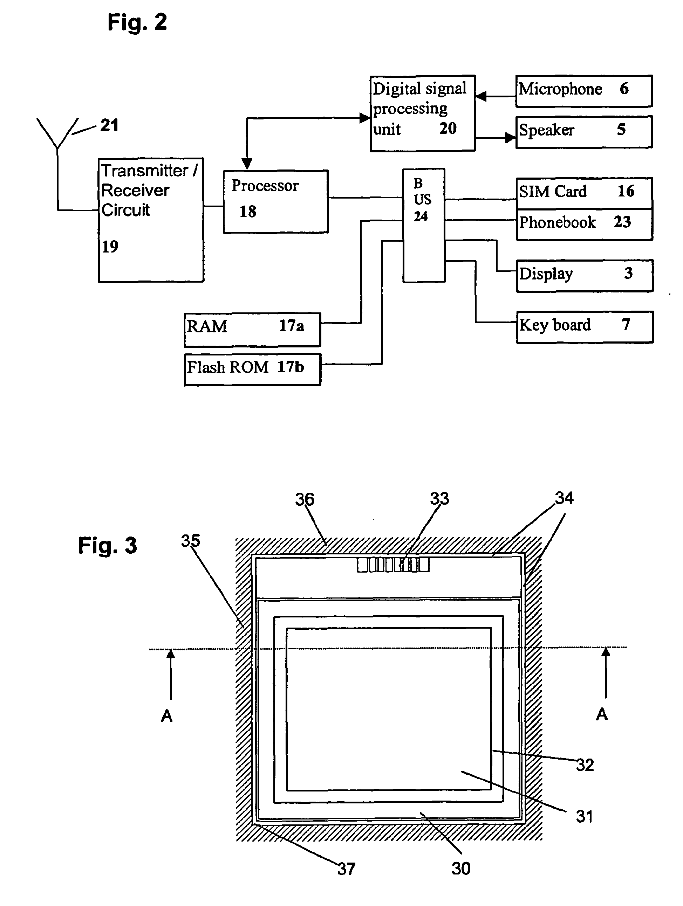

Figure 2 schematically shows the most important parts of a preferred embodiment of the phone/terminal, said parts being essential to the understanding of the invention. The microphone 6 records the user's speech, and the analogue signals formed thereby are A/D converted in an A/D converter (not shown) before the speech is encoded in an audio part 20. The encoded speech signal is transferred to a processor 18 (physical layer processor), which e.g. supports GSM terminal software. The processor 18 also forms the interface to the peripheral terminals of the apparatus, including RAM and ROM memories 17a and 17b, a SIM card 16, the display 3 and the keypad 7 (from figure 1) as well as data, power supply, etc. The processor 18 controls the communication with the network via the transmitter/receiver circuit 19 and an antenna 21. The audio part 20 speech-decodes the signal, which is transferred from the processor 18 to the speaker 5 via a D/A converter (not shown).

The processor 18 is connected via a bus 24 to a RAM memory 17a and a Flash ROM memory 17b, a SIM card 16, the display 3 and the keypad 7 (as well as data, power supply, etc.). Furthermore a phonebook 23 is connected to the processor 18 via the bus 24. The phonebook 23 may be stored on the SIM card 16, and/or in the Flash ROM memory 17a.

Figure 3 schematically show a display arrangement according to a first embodiment of the claimed invention. A display module 30 includes a liquid crystal display (LCD) 31 having a frame 32, connector pads 33 and lines (not shown) connecting the LCD 31 to the connector pads 33. The LCD has a top and bottom surfaces as well as side surfaces connecting the top surface with the bottom surface. The connection between the connector pads 33 and the printed circuit board has been left out from figure 3 to simplify it. All the way around the side surfaces of the LCD module 30 is an air gap or cavity 34, and outside the gap or cavity is located a light guide 35, wherein the LCD module has been placed.

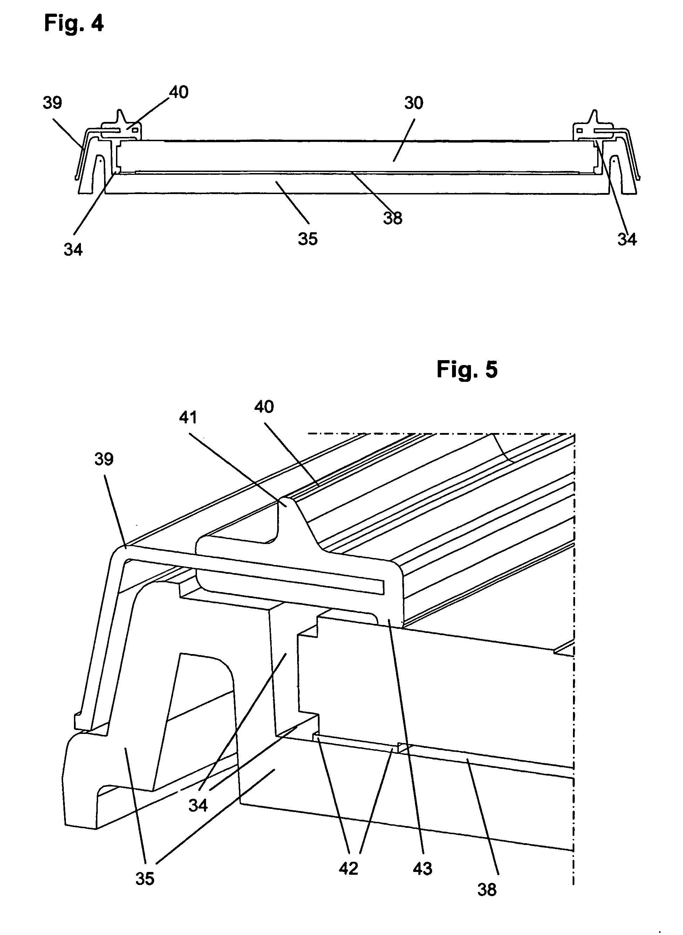

The exact design of the rest of the lightguide is not a part of the invention, but is substantially similar to lightguides used in e.g. Nokia 6210^{™}, 3310 ^{™}, 3330 ^{™} or 6510^{™}. The hatched section 36 around the inner periphery 37 of the lightguide 35 symbolizes the rest of the lightguide 35. The reference A-A in figure 3 is shown as a cross section in figure 4. The cross section of the lightguide 35 is more clear as well as the of the LCD module 30. The air gap or cavity 34 around the LCD module 30 is also shown together with an air gap or cavity 38 between the bottom surface of the LCD module 30 and the lightguide 35. Further is included a metal frame 39 that has been placed on top of the lightguide 35 to hold the LCD module 30 is position. The metal frame has been provided with an resilient gasket 40 along the inner periphery of the metal frame 39 to establish a flexible pressure on the topside of the LCD module 30. The flexible pressure enables the LCD module 30 to adjust to externally applied forces on the display arrangement that otherwise would risk to crack under the externally applied forces.

The metal frame 39 can be hold in its position by clips (not shown), snapping provisions or be provided with cut outs wherein welded plastic from the lightguide can project and thereby holding the metal frame in position. The metal frame 39 can cover over parts than the display arrangement that surrounds the display arrangement.

In figure 5 is shown an enlarged part of the display arrangement including the lightguide 35, the LCD module 30, the metal frame 39 and the resilient gasket 40. It also shows an adhesive member 42 that has been applied as strip of adhesive material along the periphery of the bottom surface of the LCD module 30. Outside and inside the adhesive strip 42 is an air gap 34 respectively 38 between the LCD module 30 and the lightguide 35. The adhesive strip 42 has a given thickness to create a distance between the bottom surface of the LCD and the housing and in order to be able to give the adhesive strip 42 resilient properties to enable absorption of externally applied forces. The adhesive strip 42 has similar properties resilient properties to those of the resilient gasket 40. The absorption of externally applied forces minimizes the impact on the LCD module 30, and the risk that the LCD 31 cracks.

The rim 43 of the resilient gasket 40 is compressed by the force it applies onto the LCD module 30, and thus creates to some degree a holding pressure on the LCD module 30.

The resilient gasket 40 is further provided with a flange 41 that serves as dust protection for the LCD module 30 and a protection window (not shown) on a front cover 2. It does not need to be a lightguide that surrounds the LCD module, but can be any kind of surrounding mechanical structure or fixture, as long as there is an air gap or cavity around the LCD module. The lightguide can be replaced by an illuminating foil or other provisions that can supply the LCD module with light for illumination.

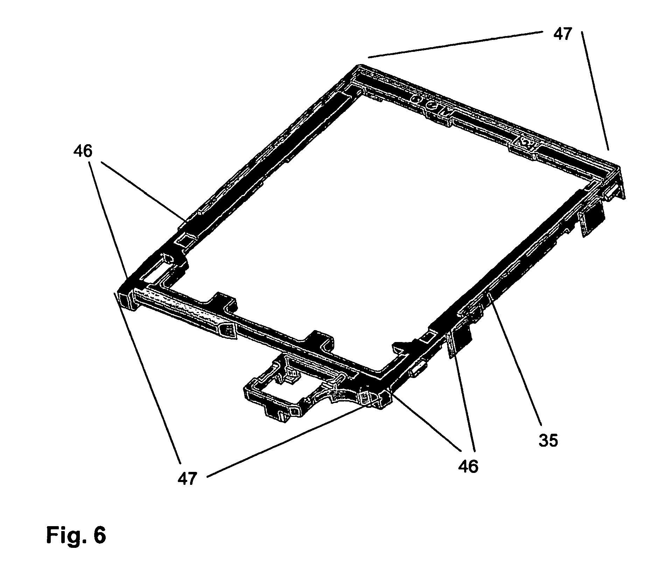

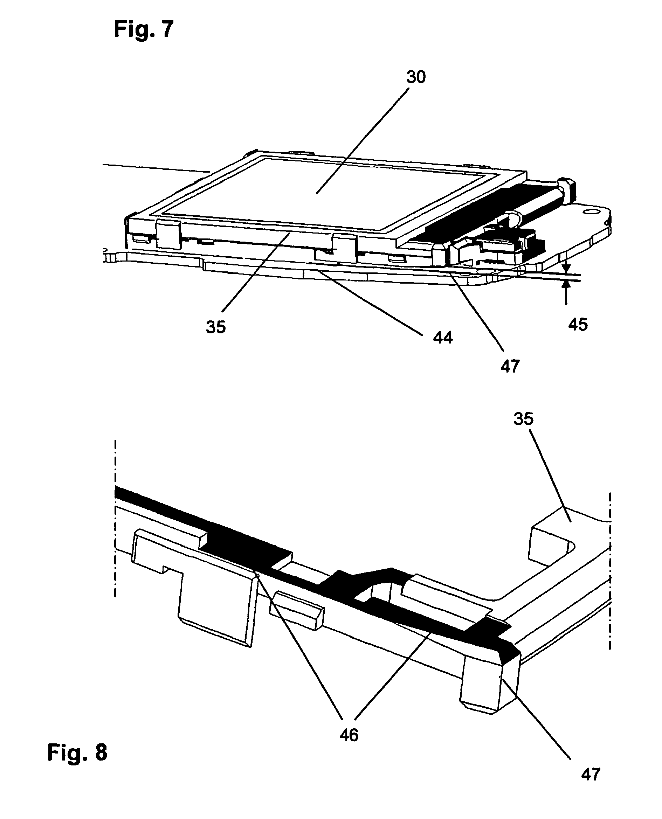

In figure 6 is shown a lightguide 35 having several parts of the bottom part of the lightguide 35 cut off to establish a recess that forms an air gap 45 (shown in figure 7) between the lightguide 35 and a printed circuit board 44. The cut-off parts (recesses) are shown as surfaces of the lightguide 35, in figure 6 and 7 by black surfaces 46. The gap 44 between the lightguide 35 and the printed circuit board 45 enables the LCD module 30 to flexibly adjust to externally applied forces since the LCD module 30 will not be in contact with lightguide 35 in the cut-out parts and accordingly not be affected by the externally applied forces. In figure 8 has one corner 47 of the lightguide 35 been shown in more detail. The cut-off surfaces 46 are more clearly shown and it is illustrated how the cut-off surface 46 stretches around the corner 47 of the bottom part of the lightguide 35. To achieve the best result all four corners 47 of the ligtguide 35 should be cut-off. Figure 7 shows that the cut-off surface 46 need not to be planar with the printed circuit board 44, but can be increasing in direction towards the corner 47 or having additional chamfers in the area closest to the corner 47.

The invention is not limited to the above-described examples or to the drawings showing examples of an embodiment, but can be varied within the scope of the appended claims.

## Claims

1. An electronic device (1) having a front cover (2) with a window frame (3) and having a display arrangement (30) for holding a liquid crystal display (30,31) below the window frame in the front cover, the display arrangement comprising:
a housing (35, 39),
a liquid crystal display (30,31) having a top surface, a bottom surface and side surfaces connecting the top and bottom surfaces, and
a resilient member (40) supported by the housing (35),
the liquid crystal display (30,31) being connected to the housing (35) in a peripheral area of the bottom surface, and
a gap (38) between side surfaces of the liquid crystal display (30,31) and any of the other components of the display arrangement
**characterized by** the resilient member (40) including:
a downwardly projecting rim (43) that is in sealing abutment with a peripheral area of the top surface of the liquid crystal display (30,31), and
an upwardly projecting flange (41) that is in abutment with the inner surface of the front cover.

2. An electronic device according to claim 1, wherein said housing comprises a first housing part (35) and a frame (39) disposed on the housing (35), said frame being provided with an aperture above the liquid crystal display (30,31), and said resilient member (40) being supported by said frame (39).

3. An electronic device according to claim 1 or 2, wherein said resilient member is resilient gasket (40) that is fitted to an inner periphery that defines said aperture.

4. An electronic device according to claim 3 wherein the said resilient gasket (40) comprises a recess in which said inner periphery is received.

5. An electronic device according to claim 3 or 4, wherein the said resilient gasket surrounds the inner periphery.

6. An electronic device according to any of claims 1 to 5, wherein the connection between the housing (35) and the peripheral area of the bottom surface comprises one or more adhesive members (42), said one or more adhesive members (42) preferably being formed by a strip of adhesive material extending along the periphery of the bottom surface.

7. An electronic device according to claim 6, further comprising a gap between the housing (35) and the bottom surface except for those areas covered bv the one or more adhesive members (42).

8. An electronic device according to claim 6 or 7, wherein the one or more adhesive members (42) have elastic properties that enable the liquid crystal display (30,31) to move relative to the housing (35).

9. An electronic device. according to any of claims 1 to 8, wherein a first housing part (35) surrounds the side surfaces of the liquid crystal display (30, 31) and covers the bottom surface of the liquid crystal display, whereas the frame (39) covers the periphery of the top surface of the liquid crystal display (30, 31).

10. An electronic device according to claim 9, wherein said resilient part (40) is disposed on the frame to provide via the downwardly projecting rim (43) a pressure on the liquid crystal display (30, 31) for providing a dust-proof seal between the liquid crystal display and the housing (35,39).

11. An electronic device according to claim 9 or 10, wherein said resilient part is (40) disposed on the frame to provide via the upwardly extending flange (41) a dust-proof seal between the display arrangement and a cover surrounding the display arrangement.

12. An electronic device according to claim 11, wherein a side connector (33) to a printed circuit board is arranged in one side of the liquid crystal display.

13. A display arrangement for use in an electronic device having a front cover (2) with a window frame (3), said display arrangement comprising:
a housing (35),
a liquid crystal display (30,31) having a top surface, a bottom surface and side surfaces connecting the top and bottom surfaces,
a frame (39) disposed on the housing (35), said frame being provided with an aperture above the liquid crystal display (30,31),
a resilient member (40) supported by the frame (39), the resilient member being in abutment with the liquid crystal display (30,31) in a peripheral area of the top surface of the liquid crystal display (30,31),
the liquid crystal display (30,31) being connected to the housing (35) in a peripheral area of the bottom surface, and
a gap (38) between side surfaces of the liquid crystal display (30,31) and any of the other components of the display arrangement
**characterized in that** the resilient member is also in abutment with the inner surface of the front cover.

14. A display arrangement according to claim 13, wherein said frame (39) covers over the display arrangement (30).

15. A display arrangement according to claim 13 or 14, wherein said resilient member is a resilient gasket (40) that is fitted to the inner periphery that defines said aperture.

16. A display arrangement according to claim 15, wherein said resilient gasket (40) comprises a recess in which said inner periphery is received.

17. A display arrangement according to claim 15 or 16, wherein said resilient gasket surrounds the inner periphery.

## Patentansprüche

1. Elektronische Vorrichtung (1), die eine vordere Abdeckung (2) mit einem Fensterrahmen (3) aufweist und eine Anzeigeanordnung (30) zum Halten einer Flüssigkristallanzeige (30,31) unter dem Fensterrahmen in der vorderen Abdeckung aufweist, wobei die Anzeigeanordnung umfasst:
ein Gehäuse (35,39)
eine Flüssigkristallanzeige (30,31), die eine obere Oberfläche, eine untere Oberfläche und seitliche Oberflächen aufweist, die die oberen und unteren Oberflächen verbinden, und
ein elastisches Element (40), das von dem Gehäuse (35) getragen wird,
eine Flüssigkristallanzeige (30,31), die mit dem Gehäuse (35) in einem Begrenzungsbereich der unteren Oberfläche verbunden ist, und
ein Zwischenraum (38) zwischen den seitlichen Oberflächen der Flüssigkristallanzeige (30,31) und jeder der anderen Komponente der Anzeigenanordnung
**dadurch gekennzeichnet, dass** das elastische Element (40) einschließt:
einen nach unten vorstehenden Rand (43), der verschließend auf dem Begrenzungsbereich der oberen Oberfläche der Flüssigkristallanzeige (30,31) ruht, und
ein nach oben vorstehender Flansch (41), der auf der inneren Oberfläche der vorderen Abdeckung ruht.

2. Elektronische Vorrichtung gemäß Anspruch 1, wobei das Gehäuse ein erstes Gehäuseteil (35) und einen Rahmen (39) umfasst, der auf dem Gehäuse (35) angeordnet ist, wobei der Rahmen mit einer Öffnung über der Flüssigkristallanzeige (30,31) versehen ist, und das elastische Element (40) von dem Rahmen (39) getragen wird.

3. Elektronische Vorrichtung gemäß Anspruch 1 oder 2, wobei das elastische Element eine elastische Dichtung (40) ist, die an einer inneren Begrenzung angepasst ist, die die Öffnung definiert.

4. Elektronische Vorrichtung gemäß Anspruch 3, wobei die elastische Dichtung (40) eine Aussparung umfasst, in der die innere Begrenzung aufgenommen ist.

5. Elektronische Vorrichtung gemäß Anspruch 3 oder 4, wobei die elastische Dichtung die innere Begrenzung umgibt.

6. Elektronische Vorrichtung gemäß einem der Ansprüche 1 bis 5, wobei die Verbindung zwischen dem Gehäuse (35) und dem Begrenzungsbereich der unteren Oberfläche ein oder mehrere adhesive Elemente (42) umfasst, wobei die ein oder mehreren adhesiven Element (42) bevorzugt durch einen Streifen von adhesiven Material geformt werden, der sich entlang der Begrenzung der unteren Oberfläche erstreckt.

7. Elektronische Vorrichtung gemäß Anspruch 6, weiter umfassend einen Zwischenraum zwischen dem Gehäuse (35) und der unteren Oberfläche, außer in den Gebieten, die mit dem einen oder mehreren adhesiven Elementen (42) bedeckt sind.

8. Elektronische Vorrichtung gemäß Anspruch 6 oder 7, wobei die ein oder mehreren adhesiven Elemente (42) elastische Eigenschaften aufweisen, die es einer Flüssigkristallanzeige (30,31) gestatten, sich relative zu dem Gehäuse (35) zu bewegen.

9. Elektronische Vorrichtung gemäß einem der Ansprüche 1 bis 8, wobei ein erstes Gehäuseteil (35) die seitliche Oberfläche der Flüssigkristallanzeige (30,31) umgibt und die untere Oberfläche der Flüssigkristallanzeige bedeckt, wobei der Rahmen (39) die Begrenzung der oberen Oberfläche der Flüssigkristallanzeige (30,31) bedeckt.

10. Elektronische Vorrichtung gemäß Anspruch 9, wobei der elastische Teil (40) auf den Rahmen angeordnet ist, um durch die nach unten vorstehenden Rand (43) einen Druck auf die Flüssigkristallanzeige (30,31) bereitzustellen, um einen staubdichten Verschluss zwischen der Flüssigkristallanzeige und dem Gehäuse (35,39) bereitzustellen.

11. Elektronische Vorrichtung gemäß Anspruch 9 oder 10, wobei der elastische Teil (40) auf dem Rahmen angeordnet ist, um durch den nach oben erstreckenden Flansch (41) einen staubdichten Verschluss zwischen der Anzeigeanordnung und einer Bedeckung, die die Anzeigeanordnung umgibt, bereitzustellen.

12. Elektronische Vorrichtung gemäß Anspruch 11, wobei ein Seitenanschluss (33) zu einer Leiterplatte auf einer Seite der Flüssigkristallanzeige (30,31) angeordnet ist.

13. Anzeigeanordnung zum Verwenden in einer elektronischen Vorrichtung, die eine vorderen Abdeckung (2) mit einem Fensterrahmen (3) aufweist, wobei die Anzeigeanordnung umfasst:
ein Gehäuse (35),
eine Flüssigkristallanzeige (30,31), die eine obere Oberfläche, eine untere Oberfläche und seitliche Oberflächen aufweist, die die oberen und unteren Oberflächen verbindet,
einen Rahmen (39), der auf das Gehäuse angeordnet ist, wobei der Rahmen mit einer Öffnung über der Flüssigkristallanzeige (30,31) versehen ist,
ein elastisches Element (40) getragen von dem Rahmen (39), wobei das elastische Element auf der Flüssigkristallanzeige (30,31) in einem Begrenzungsbereich der oberen Oberfläche der Flüssigkristallanzeige (30,31) ruht,
wobei die Flüssigkristallanzeige (30,31) in einem Begrenzungsbereich der unteren Oberfläche mit dem Gehäuse (35) verbunden ist, und
ein Zwischenraum (38) zwischen der seitlichen Oberfläche der Flüssigkristallanzeige (30,31) und jeder anderen Komponente der Anzeigeanordnung
**dadurch gekennzeichnet, dass** das elastische Element auch auf der inneren Oberfläche der vorderen Abdeckung ruht.

14. Anzeigeanordnung gemäß Anspruch 13, wobei der Rahmen (39) die Anzeigeanordnung (30) bedeckt.

15. Anzeigeanordnung gemäß Anspruch 13 oder 14, wobei das elastische Element eine elastische Dichtung (40) ist, die an der inneren Begrenzung angepasst ist, die die Öffnung definiert.

16. Elektronische Vorrichtung gemäß Anspruch 15, wobei die elastische Dichtung (40) eine Aussparung umfasst, die die innere Begrenzung aufnehmen kann.

17. Elektronische Vorrichtung gemäß Anspruch 15 oder 16, wobei die elastische Dichtung die innere Begrenzung umgibt.

## Revendications

1. Dispositif électronique (1) disposant d'un capot avant (2) doté d'un cadre de fenêtre (3) et disposant d'un dispositif d'affichage (30) destiné à maintenir un affichage à cristaux liquides (30, 31) en dessous de l'écran dans le capot avant, le dispositif d'affichage comprenant :
un boîtier (35, 39),
un affichage à cristaux liquides (30, 31) disposant d'une surface supérieure, d'une surface inférieure et de surfaces latérales reliant les surfaces supérieure et inférieure, et
un élément élastique (40) soutenu par le boîtier (35),
l'affichage à cristaux liquides (30, 31) étant relié au boîtier (35) dans une zone périphérique de la surface inférieure, et
un espace (38) entre les surfaces latérales de l'affichage à cristaux liquides (30, 31) et l'un quelconque des autres composants du dispositif d'affichage
**caractérisé par** l'élément élastique (40) comprenant :
un bord faisant saillie vers le bas (43) qui vient en butée hermétique contre une zone périphérique de la surface supérieure de l'affichage à cristaux liquides (30, 31), et
un rebord faisant saillie vers le haut (41) qui vient en butée contre la surface intérieure du capot avant.

2. Dispositif électronique selon la revendication 1, dans lequel ledit boîtier comprend une première partie de boîtier (35) et un cadre (39) disposé sur le boîtier (35), ledit cadre disposant d'une ouverture au-dessus de l'affichage à cristaux liquides (30, 31), et ledit élément élastique (40) étant soutenu par ledit cadre (39) .

3. Dispositif électronique selon la revendication 1 ou 2, dans lequel ledit élément élastique est un joint élastique (40) qui est adapté à une périphérie intérieure qui définit ladite ouverture.

4. Dispositif électronique selon la revendication 3 dans lequel ledit joint élastique (40) comprend un évidement dans lequel ladite périphérie intérieure est placée.

5. Dispositif électronique selon la revendication 3 ou 4, dans lequel ledit joint élastique entoure la périphérie intérieure.

6. Dispositif électronique selon l'une quelconque des revendications 1 à 5 dans lequel la liaison entre le boîtier (35) et la zone périphérique de la surface inférieure comprend un ou plusieurs éléments adhésifs (42), ledit ou lesdits éléments adhésifs (42) étant de préférence constitués d'un ruban de matière adhésive s'étendant le long de la périphérie de la surface inférieure.

7. Dispositif électronique selon la revendication 6 comprenant en outre un espace entre le boîtier (35) et la surface inférieure à l'exception des zones couvertes par le ou les éléments adhésifs (42).

8. Dispositif électronique selon la revendication 6 ou 7, dans lequel le ou les éléments adhésifs (42) ont des propriétés élastiques qui permettent à l'affichage à cristaux liquides (30, 31) de se déplacer par rapport au boîtier (35).

9. Dispositif électronique selon l'une quelconque des revendications 1 à 8, dans lequel une première partie de boîtier (35) entoure les surfaces latérales de l'affichage à cristaux liquides (30, 31) et couvre la surface inférieure de l'affichage à cristaux liquides, tandis que le cadre (39) couvre la périphérie de la surface supérieure de l'affichage à cristaux liquides (30, 31).

10. Dispositif électronique selon la revendication 9, dans lequel ladite partie élastique (40) est disposée sur le cadre pour exercer, par l'intermédiaire du bord faisant saillie vers le bas (43), une pression sur l'affichage à cristaux liquides (30, 31) afin de fournir une étanchéité aux poussières entre l'affichage à cristaux liquides et le boîtier (35, 39).

11. Dispositif électronique selon la revendication 9 ou 10, dans lequel ladite partie élastique (40) est disposée sur le cadre afin de fournir, par l'intermédiaire du rebord (41) s'étendant vers le haut, une étanchéité aux poussières entre le dispositif d'affichage et un capot entourant le dispositif d'affichage.

12. Dispositif électronique selon la revendication 11, dans lequel un connecteur latéral (33) sur une carte de circuit imprimé est disposé sur un côté de l'affichage à cristaux liquides.

13. Dispositif d'affichage destiné à être utilisé dans un dispositif électronique disposant d'un capot avant (2) avec un écran (3), ledit dispositif d'affichage comprenant :
un boîtier (35),
un affichage à cristaux liquides (30, 31) disposant d'une surface supérieure, d'une surface inférieure et de surfaces latérales reliant les surfaces supérieure et inférieure,
un cadre (39) disposé sur le boîtier (35), ledit cadre disposant d'une ouverture au-dessus de l'affichage à cristaux liquides (30, 31),
un élément élastique (40) soutenu par le cadre (39), l'élément élastique venant en butée contre l'affichage à cristaux liquides (30, 31) dans une zone périphérique de la surface supérieure de l'affichage à cristaux liquides (30, 31),
l'affichage à cristaux liquides (30, 31) étant relié au boîtier (35) dans une zone périphérique de la surface inférieure, et
un espace (38) entre les surfaces latérales de l'affichage à cristaux liquides (30, 31) et l'un quelconque des autres composants du dispositif d'affichage
**caractérisé en ce que** l'élément élastique vient également en butée contre la surface intérieure du capot avant.

14. Dispositif d'affichage selon la revendication 13, dans lequel ledit cadre (39) recouvre le dispositif d'affichage (30).

15. Dispositif d'affichage selon la revendication 13 ou 14, dans lequel ledit élément élastique est un joint élastique (40) qui est adapté à la périphérie intérieure qui définit ladite ouverture.

16. Dispositif d'affichage selon la revendication 15 dans lequel ledit joint élastique (40) comprend un évidement dans lequel ladite périphérie intérieure est placée.

17. Dispositif d'affichage selon la revendication 15 ou 16, dans lequel ledit joint élastique entoure la périphérie intérieure.
